# EUROPEAN PATENT APPLICATION

(11) **EP 4 528 914 A1**
(43) Date of publication of application: **26.03.2025**
(21) Application number: 24182330.1
(22) Date of filing: 14.06.2024
(51) Int. Cl.: H01M 50/579, H01M 50/477, H01M 50/474, H01M 50/103

(54) **SECONDARY BATTERY**

(30) Priority: 21.09.2023 KR 20230126147
(71) Applicant: Samsung SDI Co., Ltd., Yongin-si, Gyeonggi-do 17084 (KR)
(72) Inventor: Baek, Soo Min, 17084 Yongin-si, Gyeonggi-do (KR); Jung, Yeon Ho, 17084 Yongin-si, Gyeonggi-do (KR)
(74) Representative: Gulde & Partner

(57) **Abstract**

A secondary battery (10) includes a case (100); an electrode assembly (100) accommodated in the case (200); a first and second current collector plates (330, 340) electrically connected to the electrode assembly (100) and accommodated in the case (200); a cap assembly (300) coupled to one side of the case (200) and having a first terminal portion (350) and a second terminal portion (360) respectively electrically connected to the first and second current collector plates (330, 340); and first and second side retainers (400) respectively coupled to the first and second current collector plates (330, 340) and having protrusions (410) having ends facing an inner wall of the case (200). The side retainers (400) are configured to eliminate gaps between the current collector plates (330, 340) and the case (200) such that the electrode assembly (100) can be stably supported. Therefore, it is possible to prevent the electrode assembly (100) from moving inside the case (200) and effectively protect the electrode assembly (100) from external shock or vibration.

## Description

### BACKGROUND

### 1. Field

Embodiments of the present disclosure relate to a secondary battery capable of protecting an electrode assembly from external shock.

### 2. Description of the Related Art

A secondary battery includes an electrode assembly that is stacked or wound with a separator between a positive electrode plate and a negative electrode plate, a case that accommodates the electrode assembly with an electrolyte, and a cap assembly that seals the case. The electrode assembly has laterally or upwardly protruding substrate tabs, and the substrate tabs are gathered to one side and welded to current collector plates. The current collector plates are electrically connected to terminals provided in the cap assembly.

The electrode assembly is configured to be connected to the current collector plates through the substrate tabs, but it is not separately fixed inside the case. Accordingly, since there is no part for fixing the electrode assembly other than parts connected to the current collector plates, a problem occurs in which the electrode assembly or the electrode plate can move within the case and be damaged by external shock or vibration.

The above information disclosed in this Background section is only for enhancement of understanding of the background of the disclosure and therefore it may contain information that does not constitute prior art.

### SUMMARY

Embodiments of the present disclosure provide a secondary battery capable of protecting an electrode assembly against damage due to an external shock.

A secondary battery according to an aspect of the present disclosure may include: a case; an electrode assembly accommodated in the case; first and second current collector plates electrically connected to the electrode assembly and accommodated in the case; a cap assembly coupled to one side of the case and having a first terminal portion and a second terminal portion respectively electrically connected to the first and second current collector plates; and first and second side retainers respectively coupled to the first and second current collector plates and having protrusions having ends facing an inner wall of the case.

The electrode assembly may include long side portions and short side portions, and the current collector plates and the first and second side retainers may be on the short side portions of the electrode assembly.

The case may include long side portions and short side portions, and the current collector plates and the first and second side retainers may be located to face the short side portions of the case.

The first and second side retainers may have substantially a same size as the first and second current collector plates.

The protrusions may be dot-shaped in a front-view of the first and second side retainers.

The protrusions may have cylindrical shapes, bent cylindrical shapes, conical shapes, or bent conical shapes.

Ends of the protrusions may face the cap assembly. In particular, when the protrusions have a bent shape, ends of the protrusions may extend toward the cap assembly.

The protrusions may be arranged in multiple rows and columns.

The protrusions in each of the rows and columns may be substantially equally spaced apart from each other.

The numbers of protrusions in each of the rows and columns may be the same.

The numbers of protrusions in each of the rows or columns may be different.

The protrusions may be line-shaped in a front-view of the first and second side retainers.

The protrusions may have a shape expanded left and right such as cylindrical shapes, bent cylindrical shapes, conical shapes, and bent conical shapes.

The ends of the protrusions may face the cap assembly. In particular, when the protrusions have a bent shape, ends of the protrusions may extend toward the cap assembly.

The protrusions may be arranged in multiple rows and at least one column.

The protrusions in each of the rows and the at least one column may be substantially equally spaced apart from each other.

The protrusions may be arranged in columns, and the number of protrusions in the respective columns may be the same.

The protrusions in a row may be symmetric with the protrusions in a neighboring row.

The first and second side retainers may be bonded to the current collector plates with an adhesive.

The first and second side retainers may be coupled to the current collector plates with an interference-fit.

### BRIEF DESCRIPTION OF DRAWINGS

FIG. 1 is a perspective view of a secondary battery according to an embodiment of the present disclosure.
FIG. 2 is a partially exploded perspective view of the secondary battery according to FIG. 1.
FIG. 3 is a schematic diagram illustrating a configuration before inserting an electrode assembly during the manufacturing process of the secondary battery according to FIG. 2.
FIG. 4 is a schematic diagram illustrating a configuration in which the electrode assembly is inserted during the manufacturing process of the secondary battery according to FIG. 3.
FIG. 5 is a schematic diagram illustrating a combined structure of the electrode assembly and side retainers according to FIGS. 3 and 4.
FIG. 6 is a diagram illustrating exemplary protrusions of side retainers according to embodiments of the present disclosure.
FIG. 7 is a diagram illustrating exemplary arrangements of protrusions of side retainers according to the embodiments illustrated in FIG. 6.
FIG. 8 is a diagram illustrating exemplary protrusions of side retainers according to further embodiments of the present disclosure.
FIG. 9 is a diagram illustrating exemplary arrangements of the protrusions of side retainers according to the embodiments illustrated in FIG. 8.

### DETAILED DESCRIPTION

Embodiments of the present disclosure are provided to more fully describe the present disclosure to those skilled in the art, and the following embodiments may be embodied in many different forms and should not be construed as being limited to the example embodiments set forth herein. Rather, these example embodiments are provided so that this disclosure will be thorough and complete and will convey the aspects and features of the present disclosure to those skilled in the art.

In addition, in the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present invention.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

Hereinafter, a secondary battery according to an embodiment of the present disclosure will be described in detail with reference to the attached drawings.

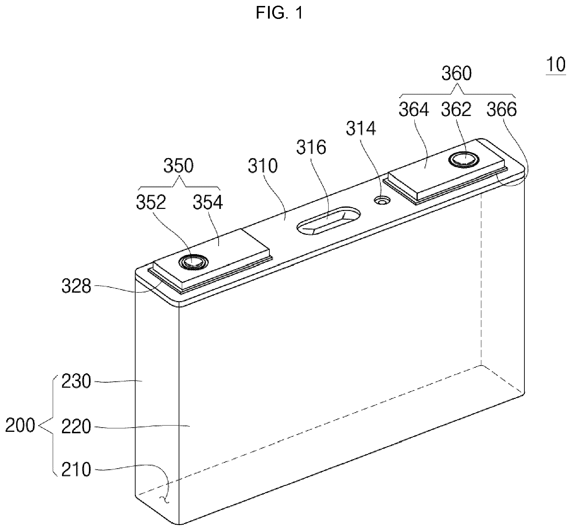

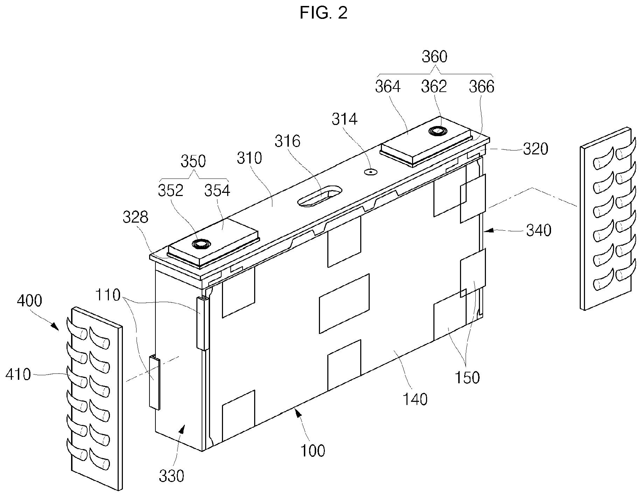

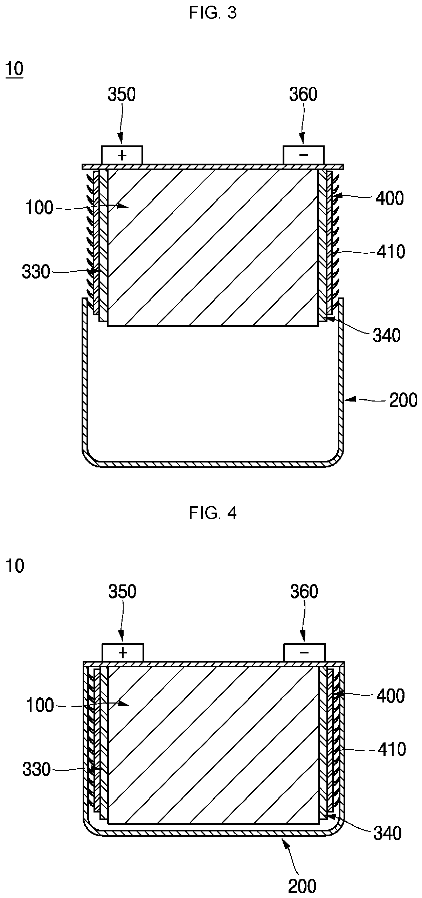

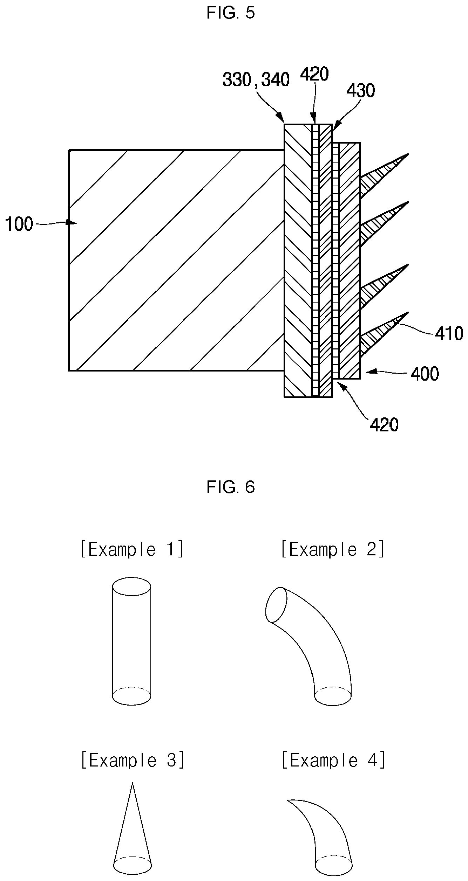

FIG. 1 is a perspective view of a secondary battery according to an embodiment of the present disclosure. FIG. 2 is a partially exploded perspective view of the secondary battery according to FIG. 1. FIG. 3 is a schematic diagram illustrating a configuration before inserting an electrode assembly into a case during the manufacturing process of the secondary battery according to FIG. 2. FIG. 4 is a schematic diagram illustrating a configuration in which the electrode assembly is inserted into the case during the manufacturing process of the secondary battery according to FIG. 3. FIG. 5 is a schematic diagram illustrating a combined structure of the electrode assembly and side retainers according to FIGS. 3 and 4.

Referring to FIGS. 1 and 2, the secondary battery 10 according to an embodiment of the present disclosure may include an electrode assembly 100, a case 200 for accommodating the electrode assembly 100, and a cap assembly 300 coupled to the case 200. In addition, the secondary battery 10 may include a first current collector plate 330 and a second current collector plate 340 that are electrically connected to the electrode assembly 100. In addition, the secondary battery 10 may further include a pair of side retainers 400 disposed between the first and second current collector plates 330 and 340 and the case 200, respectively. In an embodiment, the secondary battery 10 may be a prismatic battery in which the case 200 has a rectangular parallelepiped shape. However, this is only one embodiment, and the present disclosure can be applied to various types of secondary batteries having different shapes.

Referring to FIG. 2, the electrode assembly 100 may be provided by winding a unit stack composed of a first electrode plate, a second electrode plate, and a separator interposed therebetween, or stacking a plurality of unit stacks. When the electrode assembly 100 is formed by winding, the winding axis may be arranged in a horizontal direction substantially parallel to the longitudinal direction of the cap assembly 300 or in a vertical direction substantially perpendicular to the longitudinal direction of the cap assembly 300. When the electrode assembly 100 is formed by stacking, long side surfaces of the plurality of unit stacks may be arranged to be adjacent to each other. A sheet 140 made of an insulating material may be attached to the outside of the electrode assembly 100 by using an insulating tape 150 to insulate the electrode assembly 100 from the case 200. In an embodiment, the first electrode plate may be a negative electrode, and the second electrode plate may be a positive electrode. In one or more embodiments, the first electrode plate may be a positive electrode, and the second electrode plate may be a negative electrode.

When the first electrode plate is a negative electrode plate, the first electrode plate may be formed by applying a first electrode active material such as graphite or carbon to a first electrode current collector provided with a metal foil such as copper, copper alloy, nickel, or a nickel alloy. A first uncoated region, which is an area to which the first electrode active material is not applied, may be formed on the first electrode plate. The first uncoated portion may be punched into a certain shape to form a first substrate tab 110. A plurality of first substrate tabs 110 may be bent to one side and welded to the first current collector plate 330. The first current collector plate 330 may be electrically connected to the cap assembly 300.

When the second electrode plate is a positive electrode plate, the second electrode plate may be formed by applying a second electrode active material such as a transition metal oxide to a second electrode current collector provided with a metal foil such as aluminum or an aluminum alloy. A second uncoated region, which is an area to which the second electrode active material is not applied, may be formed on the second electrode plate. The second uncoated portion may be punched into a certain shape to form a second substrate tab (not shown). The second substrate tab may have the same shape as the first substrate tab 110. A plurality of second substrate tabs may be bent to one side and welded to the second current collector plate 340. The second current collector plate 340 may be electrically connected to the cap assembly 300.

The separator is disposed between the first electrode plate and the second electrode plate to prevent short circuit and enable the movement of lithium ions therebetween. In an embodiment, the separator may include polyethylene, polypropylene, or a composite film of polyethylene and polypropylene, but the present disclosure is not limited thereto.

The electrode assembly 100 having the above-described configuration may be accommodated in the case 200 together with an electrolyte. In some embodiments, the electrolyte may contain a lithium salt such as LiPF6 or LiBF4 in an organic solvent such as ethylene carbonate (EC), propylene carbonate (PC), diethyl carbonate (DEC), ethylmethyl carbonate (EMC), or dimethyl carbonate (DMC). In addition, the electrolyte may be in a liquid or gel phase. In some embodiments, when an inorganic solid electrolyte is used, the electrolyte may be omitted.

The electrode assembly 100 is electrically connected to terminal portions 350 and 360 of the cap assembly 300 by the first and second current collector plates 330 and 340, respectively.

Referring to FIG. 2, the first current collector plate 330 may have a substantially rectangular plate shape (e.g., a substantially planar rectangular shape). The first current collector plate 330 may be electrically connected to the first substrate tab 110 by welding. In one or more embodiments, the first current collector plate 330 may be made of the same material as the first substrate tab 110 of the first electrode plate. The first electrode plate, which is a negative electrode plate, and the first terminal portion 350, which will be described later, are electrically connected by the first current collector plate 330. The first current collector plate 330 is welded to the first substrate tab 110 and the first current collector plate 330 and the first substrate tab 110 face one of the short side portions 230 of the case 200.

Referring to the embodiment illustrated in FIG. 2, the second current collector plate 340 has the same shape (or substantially the same shape) as the first current collector plate 330. Further, the second current collector plate 340 is symmetrical with the first current collector plate 330. The second current collector plate 340 may be welded and electrically connected to a second substrate tab (not shown). In one or more embodiments, the second current collector plate 340 may be made of the same material as the second substrate tab of the second electrode plate. The second current collector plate 340 electrically connects the second electrode plate, which is a positive electrode plate, and the second terminal portion 360 to be described later. The second current collector plate 340 is welded to the second substrate tab and the second current collector plate 340 and the second substrate tab face another one of the short side portions 230 of the case 200.

In a state in which the first current collector plate 330 and second current collector plate 340 are connected to the electrode assembly 100, the side retainers 400, which will be described later, are engaged with and inserted into the case 200.

Referring again to FIG. 1, the case 200 may be in the form of a roughly rectangular box in which a longitudinal top portion is opened and a receiving space is formed to accommodate the electrode assembly 100. Through the opened top portion, the electrode assembly 100 and an electrolyte may be received inside the case 200. Some components of the cap assembly 300 may be exposed to the exterior of the case 200, and some components may be housed inside the case 200. The case 200 may comprise a rectangular bottom surface 210, and four side surfaces connected to the bottom surface 210. Among the side surfaces, the surfaces having a relatively large area are defined as long side portions 220 and the surfaces having a relatively small area are defined as short side portions 230. In an embodiment, the electrode assembly 100 may have a plate surface facing the long side portions 220. In a configuration in which the electrode assembly 100 is received in the case 200, a cap assembly 300 is coupled to the case 200 and electrically connected to the electrode assembly 100.

Referring to FIGS. 1 and 2, the cap assembly 300 may include a cap plate 310 coupled to the case 200, a plurality of insulating members, the first current collector plate 330 and the second current collector plate 340, the first terminal portion 350, and the second terminal portion 360. Only the features associated with a welding structure according to one embodiment of the present disclosure will be described below.

In one or more embodiments, the cap plate 310 is in the form of a roughly rectangular plate, which may be made of the same material as the case 200. The case 200 and the cap plate 310 may be made of metal such as steel, nickel-plated steel, steel alloy, aluminum, aluminum alloy or cold sheet for deep drawing (SPCE), or a laminated film or plastic material that constitutes the pouch. Terminal holes respectively accommodating the first terminal portion 350 and the second terminal portion 360, a liquid injection hole 314, a vent hole for engagement with the vent 316, etc. may be formed in the cap plate 310. A plurality of insulating members (not shown), such as an insulating plate 320 (see FIG. 2), may be provided to insulate the cap plate 310 and the electrode assembly 100 from each other.

The first terminal portion 350 may include a first terminal pin 352 and a first terminal plate 354. The first terminal plate 354 may be insulated from the cap plate 310 by the insulating member 328 below the first terminal plate 354. The first terminal pin 352 is electrically connected to the first electrode plate by being electrically connected to the first current collector plate 330.

The second terminal portion 360 may include a second terminal pin 362, a second terminal plate 364, and a conductive plate 366 below the second terminal plate 364. In one or more embodiments, the second terminal portion 360 is symmetric with the first terminal portion 350. The conductive plate 366 electrically connects the cap plate 310 to the second terminal plate 364, which is electrically connected to the second terminal pin 362. Therefore, the cap plate 310 is connected to the second current collector plate 340 by the second terminal portion 360, and thus can be electrically connected to the second electrode plate. Accordingly, the cap plate 310 has the same positive polarity as the second current collector plate 340, and the case 200 welded to the cap plate 310 also has a positive polarity.

Hereinafter, the above-mentioned side retainers will be described in detail with reference to FIGS. 2 to 5.

The side retainers 400 are provided in pairs. Each of the side retainers 400 is disposed between the first current collector plate 330 and the case 200, or between the second current collector plate 340 and the case 200. The pair of side retainers 400 have the same shape and are disposed symmetrically with respect to each other. Each of the side retainers 400 may have a plurality of protrusions 410 integrally formed on a rectangular plate. The side retainers 400 may have a length and width corresponding to the length and width of the first current collector plate 330 and the second current collector plate 340. The protrusions 410 extend outward in a direction facing the inner wall surface (e.g., one of the short side portions 230) of the case 200. In one or more embodiments, the side retainers 400 may be made of an insulating material that is capable of elastic deformation and that is not reactive to the electrolyte in the case 200.

In order to insert the first collector plate 330 and the second collector plate 340 into the case 200 in a configuration in which they are coupled to the electrode assembly 100, an assembly tolerance exists between the case 200 and each of the collector plates 330, 340. This assembly tolerance is a gap necessary for inserting the electrode assembly 100 into the case 200. However, when external forces are applied to the secondary battery 10 (e.g., during handling or in use), due to this assembly tolerance, the electrode assembly 100 may collide with the case 200. Strong external shocks or vibrations may cause damage to the electrode assembly 100. The protrusions 410 formed on the plate-shaped side retainers 400 are configured to prevent the electrode assembly 100 from colliding with the case 200. External shocks are absorbed by the protrusions 410, while at the same time eliminating gaps through which the electrode assembly 100 can move. In this manner, the side retainers 400 are configured to prevent the electrode assembly 100 and the electrode plates from being damaged.

In addition, the side retainers 400 may be coupled to the first current collector plate 330 and the second current collector plate 340 with an adhesive. In one or more embodiments, an adhesive layer 420 is provided on the outer sides of the first current collector plate 330 and the second current collector plate 340, an insulating film 430 is attached to the adhesive layer 420, and another adhesive layer 420 is then provided on the insulating film 430, and thus the side retainers 400 may be attached to the first current collector plate 330. The adhesive layers 420 may be formed by applying an adhesive or may be formed using an adhesive film or a double-sided tape. The adhesive layers 420 and the insulating film 430 may be separately provided and attached. The insulating film 430 is for insulation between the first current collector plate 330 and the case 200 or between the second current collector plate 340 and the case 200, and the insulating film 430 having the adhesive layer 420 provided on both sides thereof may be used. Through the insulating film 430, the side retainers 400 may be coupled to the first current collector plate 330 and the second current collector plate 340, respectively. According to further embodiments, protrusions or grooves may be formed outside the first current collector plate 330 and the second current collector plate 340, and grooves or protrusions corresponding thereto may be formed on the side retainers 400 to be coupled to each other. In one or more embodiments, hooks may be provided on one of the first current collector plate 330, the second current collector plate 340, and the side retainers 400, and hook grooves may be provided on the other to enable the side retainers 400 to be coupled to the first current collector plate 330 and the second current collector plate 340. The mechanical method for coupling grooves and protrusions or and hooks and hook grooves, etc. may be referred to as an interference fit method. The coupling of the side retainers 400 and the current collector plates 330, 340 is not limited to the above-described embodiment.

Hereinafter, various types of side retainers 400 will be described.

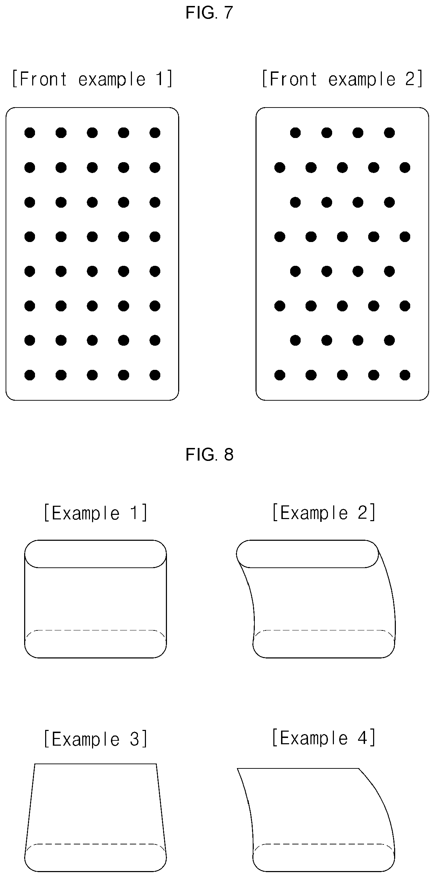

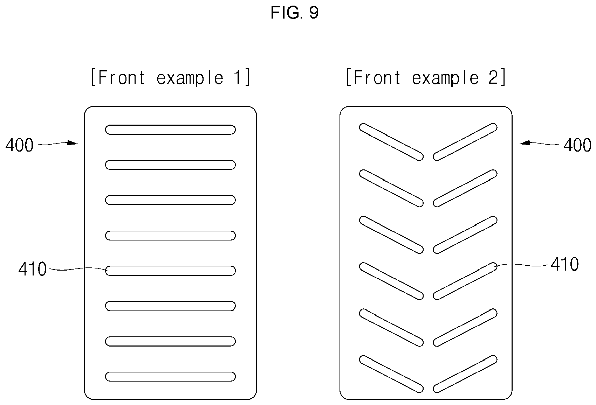

FIG. 6 is a diagram illustrating protrusions of side retainers according to an embodiment of the present disclosure. FIG. 7 is a diagram illustrating an arrangement of protrusions of side retainers according to the embodiment illustrated in FIG. 6. FIG. 8 is a diagram illustrating protrusions of side retainers according to another embodiment of the present disclosure. FIG. 9 is a diagram illustrating an arrangement of the protrusions of side retainers according to the embodiment illustrated in FIG. 8.

Referring to FIG. 6, the side retainers 400 may have various types of protrusions 410. The protrusions 410 may be of various shapes, such as a cylindrical shape as in Example 1, a bent cylindrical shape as in Example 2, a conical shape as in Example 3, or a bent cone shape as in Example 4. When the protrusions 410 are of a bent shape, ends of the protrusions 410 may be disposed toward the cap plate 310. In addition, when the protrusions 410 are of a bent shape, the protrusions 410 may be obliquely oriented when the side retainers 400 are laterally viewed. The protrusions 410 may be located on one side of the side retainers 400. As shown in FIG. 7, when the side retainers 400 are viewed from the front, the protrusions 410 may appear to be a single point. For convenience, these shapes of the protrusions are referred to as linear protrusions. The protrusions 410 may be arranged in a plurality of rows and columns and equally spaced (or substantially equally spaced) from each other. The numbers of the protrusions 410 in each row and column may be the same. Alternatively, the protrusions 410 may be equally spaced (or substantially equally spaced) from each other, but different numbers of protrusions 410 may be arranged in two or more rows or columns (e.g., in each row or column).

Referring to FIG. 8, the side retainers 400 may have protrusions 410 in which the protrusions of FIG. 6 are expanded in a certain direction. The examples shown in FIG. 8 are the protrusions 410 extending left and right from the protrusions shown in FIG. 6. For convenience, these protrusions are referred to as plane-type protrusions. When the protrusions 410 are also in a bent form, the ends of the protrusions 410 may be located toward the cap plate 310. When the side retainers 400 are viewed from the front, as shown in FIG. 9, these protrusions 410 may appear to be a line. In one or more embodiments, the protrusions 410 may be equally spaced (or substantially equally spaced) apart from each other. In front example 1 in FIG. 9, an embodiment in which the protrusions 410 are arranged in a straight line and have equal spacing (or substantially equal spacing) from each other is shown. Alternatively, the protrusions 410 may be arranged in a plurality of columns and the protrusions 410 in each row may be disposed to be symmetric (or substantially symmetric) to each other. In front example 2 in FIG. 9, an embodiment in which a plurality of protrusions 410 are diagonally arranged in two rows, and the protrusions 410 in first and second rows are symmetric (or substantially symmetric) to each other is shown. However, the shapes and arrangements of the protrusions are not limited to the embodiments described above.

By including the side retainers 400 of the above-described structure, gaps between the current collector plates and the case 200 can be eliminated and the electrode assembly 100 can be stably supported. Therefore, it is possible to prevent the electrode assembly 100 from moving and effectively protect the electrode assembly 100 from external shock or vibration.

While the foregoing embodiment has been described to practice the present disclosure, it should be understood that the embodiment described herein should be considered in a descriptive sense only and not for purposes of limitation, and various changes in form and details may be made therein without departing from the scope of the disclosure as defined by the following claims.

## Claims

1. A secondary battery (10) comprising:
a case (200);
an electrode assembly (100) accommodated in the case (200);
a first current collector plate (330) and a second current collector plate (340) electrically connected to the electrode assembly (100) and accommodated in the case (200);
a cap assembly (300) coupled to one side of the case (200) and comprising a first terminal portion (350) electrically connected to the first current collector plate (330) and a second terminal portion (360) electrically connected to the second current collector plate (340); and
a first side retainer (400) coupled to the first current collector plate (330) and a second side retainer (400) coupled to the second current collector plate (340), wherein each of the first side retainer (400) and the second side retainer (400) comprises a plurality of protrusions (410) extending toward an inner wall of the case (200).

2. The secondary battery (10) as claimed in claim 1, wherein the electrode assembly (100) comprises long side portions and short side portions, and wherein the first and second current collector plates (330, 340) and the first and second side retainers (400) are on the short side portions of the electrode assembly (100).

3. The secondary battery (10) as claimed in claim 1 or 2, wherein the first and second side retainers (400) are a same size as the current collector plates (330, 340).

4. The secondary battery (10) as claimed in one of the preceding claims, wherein the plurality of protrusions (410) are dot-shaped in a front view of the first and second side retainers (400).

5. The secondary battery (10) as claimed in claim 4, wherein the plurality of protrusions (410) have a shape selected from the group consisting of cylindrical shapes, bent cylindrical shapes, conical shapes, and bent conical shapes.

6. The secondary battery (10) as claimed in one of the preceding claims, wherein the plurality of protrusions (410) is arranged in a plurality of rows and a plurality of columns.

7. The secondary battery (10) as claimed in claim 6, wherein the plurality of protrusions (410) in each of the plurality of rows and the plurality of columns are equally spaced apart from each other.

8. The secondary battery (10) as claimed in claim 6 or 7, wherein numbers of the plurality of protrusions (410) in each of the plurality of rows and the plurality of columns are the same.

9. The secondary battery (10) as claimed in claim 6 or 7, wherein numbers of the plurality of protrusions (410) in each of the rows or columns are different.

10. The secondary battery (10) as claimed in one of claims 1 to 5, wherein the plurality of protrusions (410) are line-shaped in a front-view of the first and second side retainers (400).

11. The secondary battery (10) as claimed in claim 10, wherein the plurality of protrusions (410) are shaped such that any one selected from the group consisting of cylindrical shapes, bent cylindrical shapes, conical shapes, and bent conical shapes is expanded left and right.

12. The secondary battery (10) as claimed in one of claims 10 and 11, wherein the plurality of protrusions (410) are arranged in a plurality of rows and at least one column.

13. The secondary battery (10) as claimed in claim 12, wherein the plurality of protrusions (410) in each of the plurality of rows and the at least one column are equally spaced apart from each other.

14. The secondary battery (10) as claimed in claim 12 or 13, wherein the plurality of protrusions (410) are arranged in a plurality of columns, and wherein numbers of plurality of protrusions (410) in each of the plurality of columns are the same.

15. The secondary battery (10) as claimed in claim 14, wherein the plurality of protrusions (410) in each column of the plurality of columns are symmetric with the plurality of protrusions (410) in a neighboring column of the plurality of columns.
